Europäisches Patentamt

European Patent Office

Office européen des brevets

(11) Publication number: **0 088 105**
**B1**

(19)

# EUROPEAN PATENT SPECIFICATION

(12)

(45) Date of publication of patent specification: **30.07.86**

(51) Int. Cl.⁴: **A 01 C 17/00**

(21) Application number: **82902751.5**

(22) Date of filing: **14.09.82**

(86) International application number:
**PCT/NL82/00030**

(87) International publication number:
**WO 83/00978 31.03.83 Gazette 83/08**

(54) DEVICE FOR SPREADING GRANULAR AND/OR POWDERY MATERIAL.

(30) Priority: **14.09.81 NL 8104227**
**14.09.81 NL 8104228**

(43) Date of publication of application:
**14.09.83 Bulletin 83/37**

(45) Publication of the grant of the patent:
**30.07.86 Bulletin 86/31**

(84) Designated Contracting States:
**DE FR GB NL**

(56) References cited:
**EP-A-0 053 419**
**FR-A-2 440 143**
**NL-A-7 901 632**
**US-A-2 489 171**
**US-A-3 964 681**

(73) Proprietor: **C. van der Lely N.V.**
**Weverskade 10 P.O. Box 26**
**NL-3155 ZG Maasland (NL)**

(72) Inventor: **Van der LELY, Cornelis**
**7 Brüschenrain**
**CH-Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a device for spreading granular and/or powdery material, in particular fertilizer, seeds or suchlike material comprising a frame, a hopper arranged on said frame and at least two distribution members drivably in opposite directions about axes of rotation and each member being supplied during operation by material from at least one respective outlet of the hopper, which outlet is formed by at least one outlet opening, in such a way that during operation the area covered with material spread by the distribution members at least for the major part coincide with one another, whereby near the outlet opening of the hopper for each distribution member a movable dosing member with at least one opening for operation with the outlet opening of the hopper is arranged.

Devices of this kind are known from the French patent application FR—A—2.440.143.

With devices of the kind set forth it is often difficult to prevent the material, spread along the edges of fields, from falling on neighbouring fields and/or ditches.

The construction according to the invention now permits of effectively spreading the material, without involving the aforesaid disadvantages, because means are provided for controlling the spreading of the material in a manner such that selectively the material can be spread over coinciding areas which extend substantially only to the left or right hand side of the longitudinal axis of the device, as seen in the normal intended direction of travel of the device. Moreover, when other kinds of fertilizer have to be spread, readjustment is not necessary with this construction so that the machine can be operated by unskilled labour without the risk of adverse effects.

According to a further aspect of the invention an adjusting device is hydraulically or pneumatically operable from the driver of the device. In this way any adjustment of the mechanism can be carried out easily and preferably from the driver seat.

From the US—A—2 489 171 there is known a device with a single distribution member to which the material can be delivered by a dosing mechanism in such a way that the material is selectively to be spread over a wide range extending at both sides of the device or only to the left or right sides of the device.

According to the invention there is obtained a very simple construction which can be easily used in a device with two distribution members spreading the material over coinciding areas.

For a better understanding of the invention and to show how the same can be carried into effect, reference will be made by way of example to the accompanying drawings.

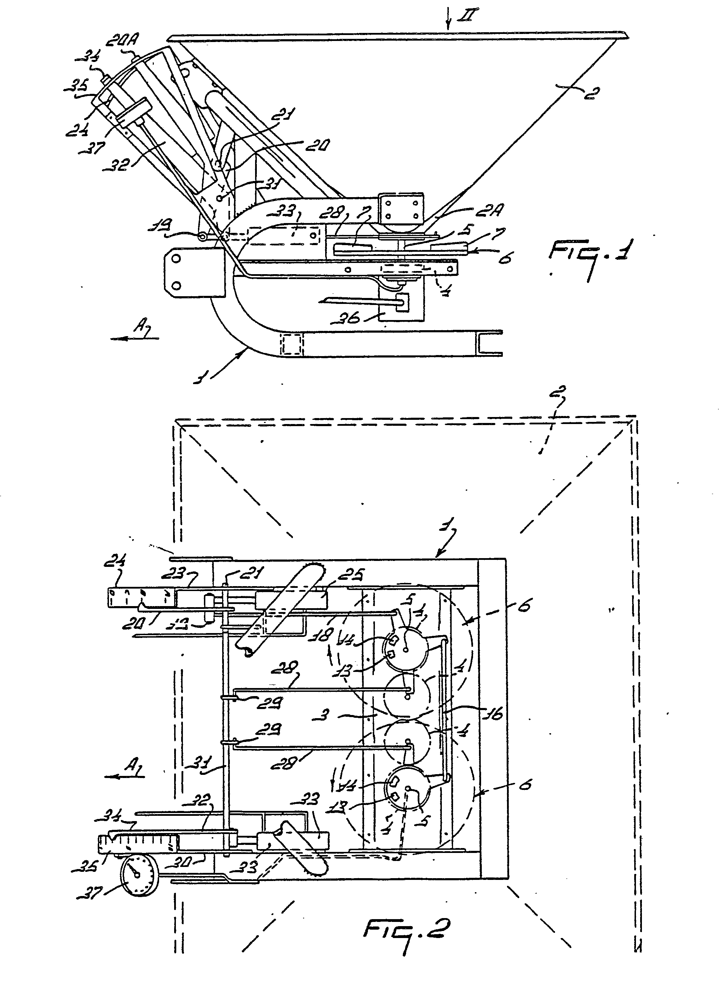

Fig. 1 is a side elevation of a device for spreading granular or powdery material comprising a construction embodying the invention.

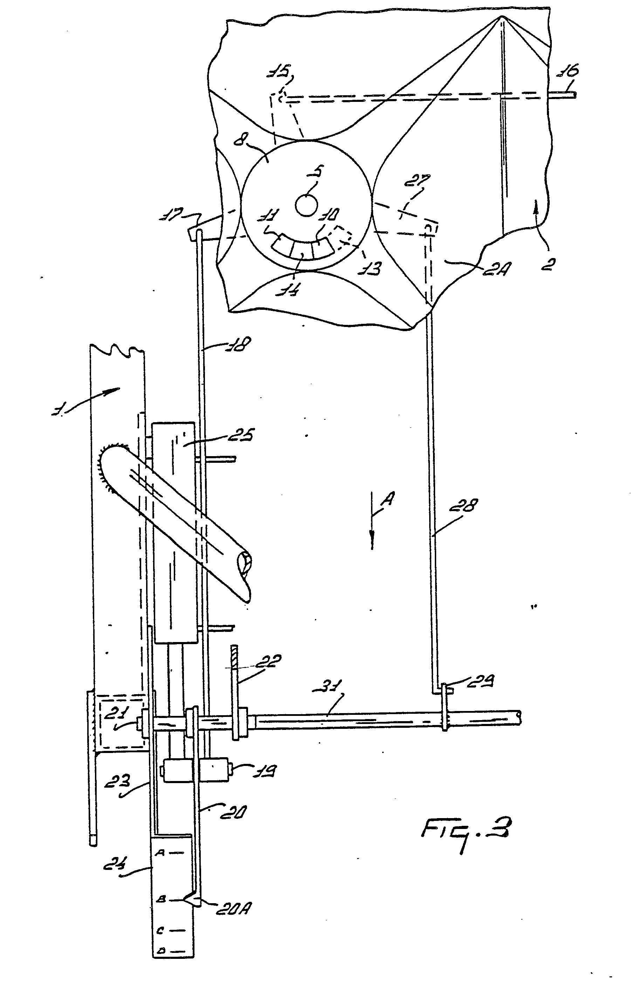

Fig. 2 is an elevational view in the direction of the arrow II in Fig. 1.

Fig. 3 shows on an enlarged scale a setting mechanism covered by the invention.

Fig. 4 schematically shows the various positions of the disc of the dosing mechanism to be hydraulically or pneumatically set.

Fig. 5 is a schematic plan view of the manner of spreading the material when an operational position for spreading to the left is set in a device embodying the invention comprising two distribution members arranged side by side.

Fig. 6 is a similar view, the working position being set for spreading the material to the right.

Fig. 7 is a plan view of the distribution pattern obtained by device embodying the invention comprising two adjacent distribution members when a working position is set in which spreading is performed on two sides.

Fig. 8 is a front view of a second embodiment of a device in accordance with the invention and

Fig. 9 is an elevational view in the direction of the arrow IX in Fig. 8.

Fig. 10 schematically shows an electric monitor panel with the aid of which the actuation of the device can be electrically checked.

Fig. 11 is a side elevation of a device embodying the invention in a self-propelled design.

Fig. 12 is a plan view of the device schematically shown in Fig. 11.

The device illustrated in the figures is intended to spread granular and/or powdery material, particularly fertilizer, seeds and the like. The device comprises a frame 1, on which a hopper 2 is supported. Viewed on plan, the hopper 2 has a rectangular shape and is disposed so that the longer rectangle side extends transversely of the direction of travelling A of the device. From its top side the hopper tapers downwards and is provided on the underside with two relatively spaced, circular outlets 2A located side by side. The outlets are separated from one another by a roof-shaped elevated part extending in the direction of movement of the machine.

Below the hopper 2 the frame 1 is provided with a gear box 3 extending transversely of the direction of travelling A and having journalled in it side by side four identical spur gear wheels 4, which are drivably in mesh with one another. The outer gear wheels 4 are arranged on upwardly extending, preferably at least substantially vertical (by horizontal position of the device) shafts 5, the longitudinal centre lines of which coincide at least substantially with the longitudinal centre lines of the respective outlets 2A on the underside of the hopper 2.

Just above the gear box 3 and below an outlet 2A each shaft 5 is provided with a distribution member 6 formed by a spreading disc, the disposition being such that the circumferences of the spreading discs are adjacent one another. Each of the distribution members 6, preferably having a diameter of 35 cms, is provided with two blades 7 in opposite positions, extending up to the circumference of a spreading disc. The ejection blades 7 have a crescent-shaped cross-sectional area and, viewed on plan, their outermost ends are diametrically opposite one another. Viewed from the circumference of a distribution member the blades 7 are curved in the direction of rotation of a distribution member during operation in a manner such that, also viewed on plan, the inner ends of the blades are located substantially one on each side of the circular outlet 2A.

Each of the blades 7 is arranged so that the inner end is located on a lower level than the outer end. The respective distribution members 6 provided with the blades 7 are relatively disposed so that whereas a line going through the outer ends of the blades of one distribution member extends at least substantially in the direction of travelling A of the device, a line going through the outer ends of the blades of the neighbouring spreading disc is at least substantially at an angle of 90° to the first-mentioned line (Figs. 5 to 7).

Each of the circular outlets 2A is closed by means of a circular bottom plate 8, which has a central opening for passing the shaft 5 of a distribution member 6. At the top end the shaft is provided with an agitator 9. Each bottom plate 8 has two identical openings 10, 11 and 10', 11' respectively, which cover a sector of about 25° and extend in a radial direction over at least substantially one quarter of the radius of the circular plate 8. The openings 10, 11 and 10', 11' are located in the foremost half of the plate 8, viewed with respect to the direction of travelling A and are arranged in the manner shown in Fig. 4 with respect to a vertical plane extending in the direction of travelling A and going through the longitudinal centre line of the shaft 5 forming the rotary axis of the distribution member 6. The outermost outlet openings 11 and 11' are spaced apart from said plane equal to about twice the distance between the outlet openings 10 and 10' and said plane.

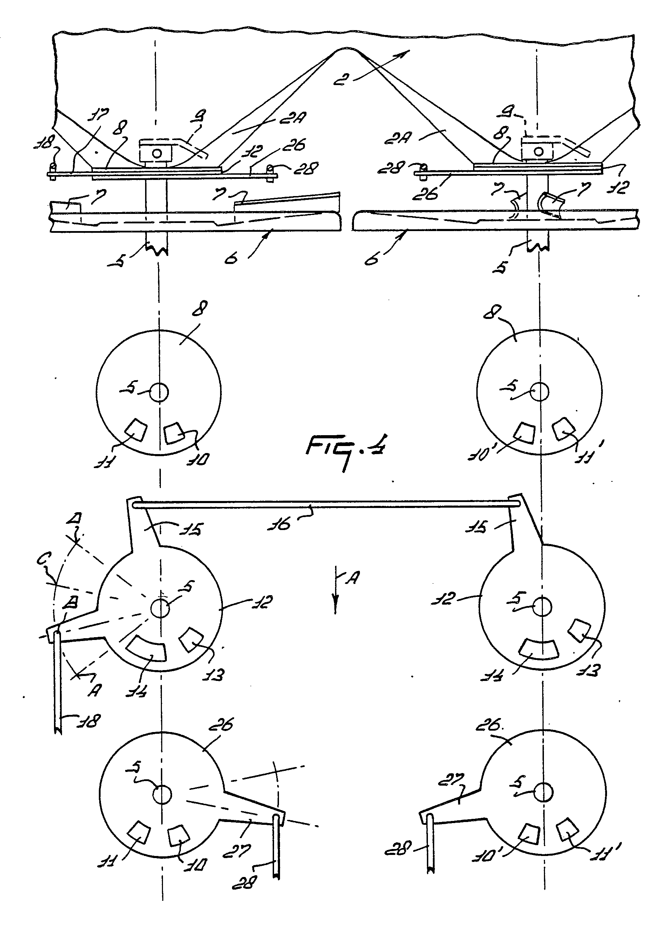

At the underside of the bottom plate 8 is located a first dosing disc 12, which is rotatable about the shaft 5 of a distribution member 6. The dosing plate 12 has openings 13 and 14 occupying positions corresponding with the positions of the outlet openings 10, 11 and 10', 11' in the bottom plate (Fig. 3). However, the size of the outer and inner openings respectively is twice the size of the openings in the bottom plate 8.

Each of the first dosing discs 12 is provided with an arm 15. These arms are directed to the rear with respect to the direction of travelling and extend at least substantially parallel to one another. The arms 15 are pivotally interconnected by means of a transverse rod 16. Furthermore, viewed in the direction of travelling A of the device, the right-hand, first dosing disc 12 is provided with an arm 17, which extends outwardly and is pivotally connected with a coupling rod 18. The front end of the coupling rod 18 is pivotally coupled by means of a pin 19 with a lower end of an angle-section lever 20. The angle-section lever 20 is pivotable about a shaft 21 extending transversely of the direction of travelling A and being supported by supports 22 and 23 at the front of the frame 1. The top end of the angle-section lever 20 constitutes a pointer 20A, which is movable along a dial 24 on the top side of the support 23. The dial 24 has four positions indicated by the characters A, B, C and D. The pin 19 is engaged by the end of a piston rod of a double-acting hydraulic or pneumatic ram 25, the longitudinal centre line of which extends at least substantially in the direction of travelling of the device.

Below each first dosing disc 12 is arranged a second dosing disc 26, which like the bottom plate 8 has identical openings and which is also rotatable about the shaft 5. On the proximal sides the dosing discs 26 are provided with arms 27, each of which is pivotally coupled with one end of a rod 28. The other ends of the respective rods 28 extending to the front are pivotally connected on arms 29 fastened to a shaft 31 extending transversely of the direction of travelling A and being journalled in the support 23 and a support 30. The shaft 31 is provided with an angle-section lever 32, one end of which is pivotally connected with the piston rod of a double-acting hydraulic or pneumatic ram 33, the longitudinal centre line also extends in the direction of travelling A. The other end of the angle-section lever 32 constitutes a pointer 34, which is displaceable along a dial 35 on the support 30. The dial 35 has the digits 1 to 10, from which can be read the quantity of material distributed per unit of square. For example, position 1 may correspond to 100 kgs/hectar, position 2 to 200 kgs/hectar and so on.

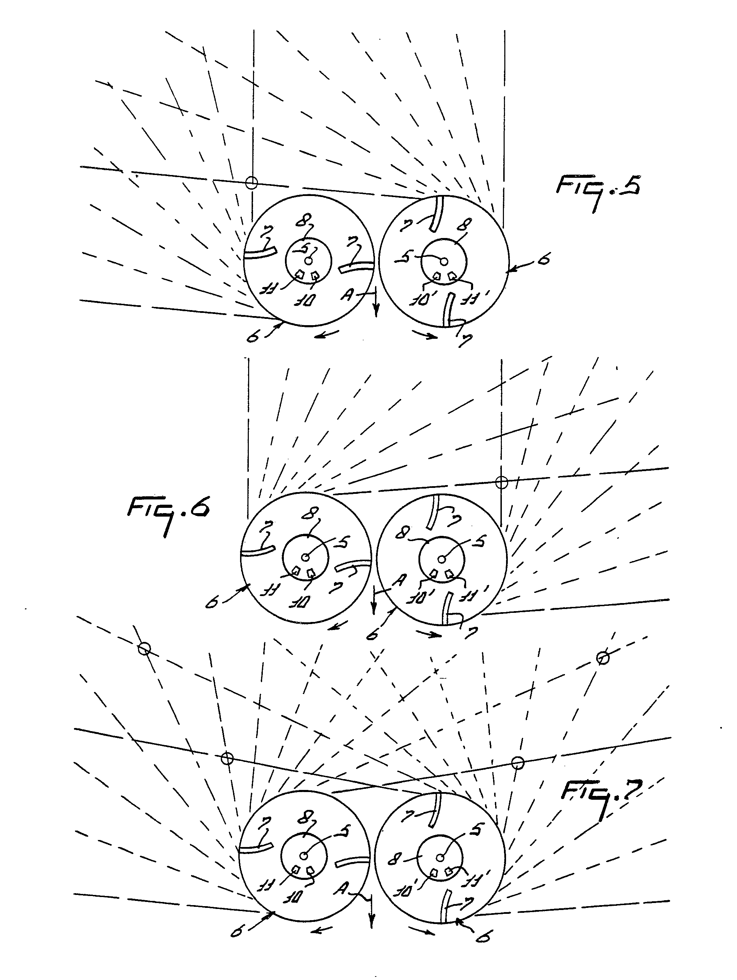

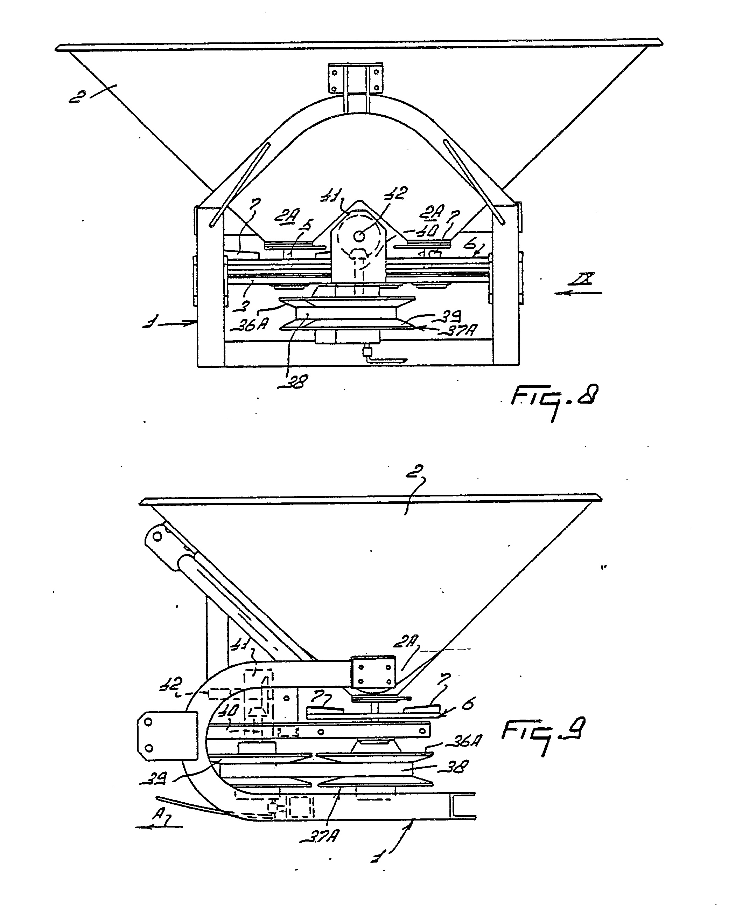

As stated above, the dial 24 has four positions designated A, B, C, D. The respective positions of the first dosing disc 12 associated with the four positions of the dial 24 are schematically indicated in Fig. 4. The drawing shows the position of the first dosing discs 12 in the position B of dial 24. When position A is set, the outlet openings 10 and 11' and the corresponding outlets in the second dosing disc 26 are open and the material can flow through these openings on the distribution members 6 rotating in opposite senses as indicated by arrows so that—viewed from the place of the operator schematically in Fig. 5—the material is spread to the left. Position B corresponds with the working position in which the material is spread to the right (Fig. 6), the orifices 11 and 10' in the bottom plate 8 and the second disc 26 (Fig. 4) being open, whereas position C corresponds with the normal working position in which all openings are open and the material is spread in two directions (Fig. 7). The fourth position D is not a working position, since in this position of the first dosing discs said outlet openings are closed. The displacement of the pointer 20A and hence of the first dosing disc 12 can be performed with the aid of the setting ram 25 from the cabin of a tractor carrying the device. The bottom plate 8 and the first and second dosing discs 12 and 26 constitute a dosing mechanism which can be set hydraulically or pneumatically in three working positions so that the material can be spread either to the left or to the right or normally, that is to say, to two sides of the longitudinal axis of the device. Moreover, the dosing mechanism can be hydraulically or pneumatically set so that per unit of square different amounts, for example, those indicated above can be spread by the two distribution members 6. In each working position the areas covered by the distribution members 6 coincide for the major part.

With the aid of the left-hand setting ram 33, viewed in the direction of travelling A of the device, the second dosing disc 26 can be set and hence the quantity of material to be spread in the above mentioned positions. The ten positions indicated on dial 35 vary from almost closed to fully open openings 10, 11 and 10', 11' (see Fig. 4).

Fig. 7 schematically shows in a plan view by means of a number of lines how the spreading ranges of the adjacent distribution members 6 cover one another for the major part in a normal spreading operation. The figure indicates the paths of grains simultaneously ejected by the ejection blades 7 of the two distribution members and a few crossings of these paths. This does not mean, however, that the particles moving along the indicated lines will collide, since the distances covered by the particles after leaving the respective distribution members are different so that at the indicated points the grains are at different levels.

One of the intermediate gear wheels 4 in the gear box 3 is arranged on a shaft protruding from the underside of the gear box 3. The protruding end is connected with a hydraulic motor 36, which like the rams 25 and 33 can be coupled with the hydraulic circuit of a tractor. With the aid of the motor 36 the speed of rotation of the distribution members 6 can be varied from the tractor cabin. A revolution counter 37 is provided for determining the number of revolutions which may vary from a minimum of 750 to a maximum of 1500. By varying the number of revolutions the width over which the material is spread may be varied, if desired, also from the tractor cabin, for example, from 24 to 10 meters.

Figs. 8 and 9 show an embodiment in which the protruding end of the above-mentioned shaft is provided with a pulley 36A of a V-belt change-speed gear 37A. The rope 38 of the change-speed gear 37A is furthermore passed around a pulley 39, which is adjustable in known manner. The pulley 39 is arranged on a shaft 40 extending in upward direction as far as into a gear box 41, which is supported on the frame 1. Inside the gear box 41 the shaft 40 is drivably connected by means of a bevel gear wheel transmission with a shaft 42 emerging from the front side of the gear box, said shaft being connectable through an auxiliary shaft with the power take-off shaft of a tractor. The use of this change-speed gear and the upwardly directed shafts permits of making compact construction. Also in this embodiment a revolution counter may be provided.

The front side of the frame 1 is provided with the conventional coupling means for hitching the machine to the three-point lifting device of a tractor, whilst as stated above the distribution members can be driven from the power take-off shaft of the tractor through a V-belt change-speed gear 37A or through the hydromotor 36. For varying the working positions, for putting the machine out of operation and for regulating the quantity of material the setting rams 25 and 33 are connected with the hydraulic circuit of the tractor.

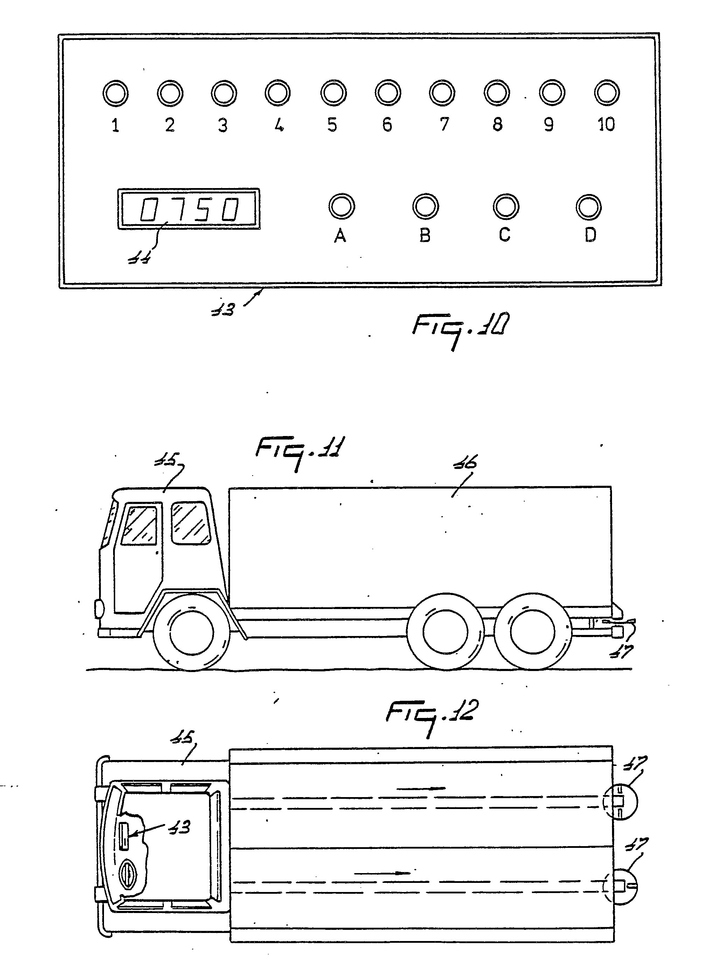

Instead of using the above-mentioned dials 24 and 34 for setting the working positions or the quantities to be distributed per unit of square, a panel 43 (Fig. 10) may be used in the tractor cabin, on which the respective positions 1 to 10 and the four working positions A, B and C and the position D are indicated by lamps. The panel 43 may furthermore be provided with a digital revolution counter 44. The panel 43 with the associated electric monitoring means is particularly suitable for use in a self-propelled spreading device to be actuated in the manner described above, which is schematically shown in Figs. 11 and 12. Herein the cabin 45 is located in front of the hopper 46 and at a relatively large distance from the spreading mechanisms 47. The above-described hydraulic or pneumatic actuation of the dosing mechanism both for setting the working positions (spreading direction) and for regulating the amount of material to be distributed permits of carrying out all manipulations from the driver cabin and of checking them. The same applies to the control of the distribution width with the aid of a variation of the number of revolutions and to putting the machine out of operation (position D).

The specifically designed distribution members 6 are arranged side by side and the locations of the openings 10, 11 and 10', 11' cause the distribution areas of the distribution members of the device schematically illustrated in Figs. 5 to 7 to coincide for the major part. Therefore, without further adjustment various kinds of fertilizer can be spread so that the machine is particularly suitable for actuation by unskilled persons.

**Claims**

1. A device for spreading granular and/or powdery material, in particular fertilizer, seeds or suchlike material comprising a frame (1), a hopper (2) arranged on said frame and at least two distribution members (6) drivable in opposite directions about axes (5) of rotation and each member (6) being supplied during operation by material from at least one respective outlet of the hopper (2), which outlet is formed by at least one outlet opening (10, 11, resp. 10', 11') situated above the distribution member (6) in such a way that during operation the area covered with material spread by the distribution members (6) at least for the major part coincide with one another, whereby near the outlet opening 10, 11,

resp. 10', 11 of the hopper (2) for each distribution member (6) a movable dosing member (12) with at least one opening (13, 14) for operation with the outlet opening (10, 11, resp. 10', 11') of the hopper (2) is arranged, characterized in that each dosing member (12) is provided with at least one opening (13, 14) which is different in size relative to the outlet openings (10, 11 resp. 10', 11') in the hopper (2) and that the opening (13, 14) of one dosing member (12) is angularly differently situated around the axis (5) of rotation of its distribution member (6) relative to the direction of travel (A) with regard to the opening of the other dosing member (12), whereby each of the dosing members (12) is adjustable and arrangeable selectively in any of at least three different positions, in such a way that during operation in a first position of the dosing members (12) the outlet openings (10, 11 resp. 10', 11') of the hopper (2) to both distribution members (6) are fully cooperating with openings (13, 14) of the closing members (12) whereby the material is spread by each distribution member (6) substantially to equal distances to both sides of the longitudinal centerline of the device and whereby in a second position the said outlet openings (10, 11 resp. 10', 11') are for substantially a half part opened and substantially a half part closed in such a way that the material is only spread to the left side of the device relative to the direction of travel (A) and in a third position the outlet openings (10, 11 resp. 10', 11') are contrary to the second position namely substantially a half part closed and substantially a half part opened whereby the material is spread to the right side of the device.

2. A device as claimed in claim 1, characterized in that each dosing member (12) has two openings (13 and 14), whereby one of these openings (13) is equal to each of two equal and separated openings (10, 11 resp. 10', 11') in the hopper, whereas the other opening (14) in each dosing member has a size which is twice the size of an outlet opening (10, 11 resp. 10', 11') of the hopper.

3. A device as claimed in claim 1 or 2, characterized in that both dosing members (12) are coupled with one another by a coupling member (16) to be equally angularly adjustable about the axes of rotation of the respective distribution members (6), whereby one of the dosing members (12) is coupled with an adjusting device (18, 20, 24) to set the dosing members (12) selectively in one of their positions.

4. A device as claimed in claim 3, characterized in that the adjusting device is fixable in a position wherein the dosing members (12) are arrangeable in a fourth position whereby the openings (13, 14) thereof are in a non-cooperative position relative to the outlet openings (10, 11, resp. 10', 11') for closing these outlet openings by the dosing member (12).

5. A device as claimed in any one of the preceding claims, characterized in that an adjustable second dosing member (26) is arranged near the outlet of the hopper for each distribution member (16), which second dosing member (26) for each outlet has openings equal in size and equally arranged to the outlet openings (10, 11 resp. 10', 11') to regulate the free delivery of the material per unit of time through the outlet openings (10, 11, 10', 11') and the cooperating openings (13, 14) in the first dosing members in each of the three positions of the first dosing members (12) relative to the outlet of the hopper (2).

6. A device as claimed in anyone of the preceding claims, characterized in that the first and/or second dosing members (12) being coupled with a hydraulically or pneumatically adjusting device for setting the dosing members (12) selectively in one of their positions.

7. A device as claimed in claim 6, characterized in that the hydraulically or pneumatically adjusting device is operationable from the drivers seat of the tractor or like vehicle to which the device is coupled.

8. A device as claimed in claim 6 or 7, characterized in that the hydraulic or pneumatic setting of a disc is associated with a displacement of a pointer (20A) moving along a dial (24), whereby for a first disc a dial with four positions is arranged at the front of the device, whereas for the second disc a dial having ten positions is arranged on the front side of the device.

9. A device as claimed in anyone of the preceding claims, characterized in that a distribution member (6) comprises two ejection blades (7).

10. A device as claimed in anyone of the preceding claims, characterized in that the two distribution members are two spreading discs (6) which are arranged so that whereas, viewed on plan, a line going through the ends of two opposite ejection blades (7) of one spreading disc (6) extends at least substantially in the intended direction of travelling of the device, a line going through the ends of opposite ejection blades (7) of the adjacent disc (6) intersects the first-mentioned line at least substantially perpendicularly.

11. A device as claimed in claim 9 or 10, characterized in that near their outer ends the blades (7) are arranged at a higher level than near their inner ends.

12. A device as claimed in anyone of the preceding claims, characterized in that the driving gear for the spreading disc (6) comprises a transmission with which the speed of rotation of the distribution member (6) is continuously variable.

13. A device as claimed in claim 12, characterized in that the device comprises a revolution counter (37) with the aid of which the number of revolutions of at least one spreading disc (6) is indicated.

14. A device as claimed in claim 12 or 13, characterized in that the continuously variable transmission (37A) is formed by a V-belt transmission.

15. A device as claimed in claim 12 or 13, characterized in that the continuously variable transmission comprises a hydromotor (36).

16. A device as claimed in anyone of claims 12—15, characterized in that the revolution counter (37) is located at the front of the device.

17. A device as claimed in anyone of claims 12—16 characterized in that the revolution counter is of a mechanical design.

18. A device as claimed in anyone of claims 12—17 characterized in that the revolution counter comprises a digital counter (44).

19. A device as claimed in anyone of the preceding claims, characterized in that the two distribution members (6) formed by spreading discs rotatable about upwardly extending shafts (5) are arranged side by side, whereas the upwardly directed axis of rotation of the spreading discs are journalled in a gear box (3) and spur gear wheels (4) arranged on the shafts (5) inside the gear box are drivably in mesh with intermediate, identical gear wheels, one of which is fastened to a shaft, which is furthermore engaged by a variable transmission.

20. A device as claimed in anyone of the preceding claims, characterized in that the operation of the device can be electrically monitored.

21. A device as claimed in claim 20, characterized in that a monitor panel (43) is provided near the seat of the operator of the device.

22. A device as claimed in anyone of the preceding claims, characterized in that the device is connected with the three-point lifting device of a tractor.

23. A device as claimed in anyone of claims 1—21, characterized in that the device is self-propelled.

**Patentansprüche**

1. Vorrichtung zum Ausstreuen von körnigem und/oder pulverigem Gut, insbesondere Dünger, Saatgut oder ähnlichen Stoffen, mit einem Rahmen (1), einem Vorratsbehälter (2), der auf dem Rahmen angeordnet ist, und mindestens zwei Verteilern (6), die gegensinnig um Drehachsen (5) antreibbar sind, wobei jeder Verteiler (6) während des Arbeitsvorgangs mit Streugut von jeweils mindestens einem Auslaß des Vorratsbehälters gespeist wird, der von mindestens einer Auslaßöffnung (10, 11 bzw. 10', 11') gebildet wird, die oberhalb des Verteilers derart angeordnet ist, daß beim Streuvorgang die von den Verteilern (6) ausgestreuten Bereiche wenigstens zum größten Teil deckungsgleich sind, wobei in der Nähe der Auslaßöffnung (10, 11 bzw. 10', 11') des Vorratsbehälters für jeden Verteiler (6) ein bewegliches Dosierglied (12) mit mindestens einer Öffnung (13, 14) zur Zusammenarbeit mit der Auslaßöffnung (10, 11 bzw. 10', 11') des Vorratsbehälters (2) vorgesehen ist, dadurch gekennzeichnet, daß jedes Dosierglied (12) mit mindestens einer Öffnung (13, 14) versehen ist, die in ihrer Größe von den Auslaßöffnungen (10, 11 bzw. 10', 11') des Vorratsbehälters verschieden ist, und daß die Öffnung (13, 14) des einen Dosiergliedes (12) winkelversetzt zur Öffnung des anderen Dosiergliedes (12) angeordnet ist, bezogen auf die Drehachse (5) seines Verteilers (6) und die Fahrtrichtung (A), wobei jedes Dosierglied (12) einstellbar und wahlweise in einer von mindestens drei Positionen feststellbar ist, derart, daß bei dem Streuvorgang in der ersten Position des Dosiergliedes (12) die Auslaßöffnungen (10, 11 bzw. 10', 11') des Vorratsbehälters (2) für beide Verteiler (6) vollständig mit den Öffnungen (13, 14) des Dosierglieds (12) zusammenarbeiten, wobei das Streugut von jedem Verteiler (6) überwiegend im gleichen Abstand beiderseits der Längsmittelachse der Vorrichtung ausgestreut wird, und daß in einer zweiten Position die Auslaßöffnungen (10, 11 bzw. 10', 11') zur Hälfte geöffnet und zur Hälfte geschlossen sind, derart, daß das Streugut nur auf der—bezogen auf die Fahrtrichtung (A)—linken Seite der Vorrichtung ausgestreut wird, und daß in einer dritten Position die Auslaßöffnungen (10, 11 bzw. 10', 11') entgegengesetzt zur zweiten Position ausgerichtet sind, nämlich halb geschlossen und halb geöffnet, wobei das Streugut nur auf der—bezogen auf die Fahrtrichtung (A)—rechten Seite der Vorrichtung ausgestreut wird.

2. Vorrichtung nach Anspruch 1, dadurch gekennzeichnet, daß jedes Dosierglied (12) zwei Öffnungen (13 und 14) aufweist, wobei eine dieser Öffnungen (13) identisch mit zwei gleichen und getrennten Öffnungen (10, 11 bzw. 10', 11') in dem Vorratsbehälter ist, und die andere Öffnung (14) in jedem Dosierglied doppelt so groß wie eine der Auslaßöffnungen (10, 11 bzw. 10', 11') des Vorratsbehälters ist.

3. Vorrichtung nach Anspruch 1 oder 2, dadurch gekennzeichnet, daß die beiden Dosierglieder (12) mit einem Koppelglied (16) miteinander verbunden sind, damit sie zu den Drehachsen des jeweiligen Verteilers (6) im gleichen Winkel einstellbar sind, wobei das eine Dosierglied (12) mit einer Stellvorrichtung (18, 20, 24) verbunden ist, um die Dosierglieder (12) wahlweise in den drei Positionen auszurichten.

4. Vorrichtung nach Anspruch 3, dadurch gekennzeichnet, daß die Stellvorrichtung in einer Position feststellbar ist, in der die Dosierglieder (12) in eine vierte Position ausrichtbar sind, wobei ihre Öffnungen (13, 14)—bezogen auf die Auslaßöffnungen (10, 11 bzw. 10', 11')—nicht zusammenwirken, derart, daß diese Auslaßöffnungen mittels des Dosiergliedes (12) geschlossen sind.

5. Vorrichtung nach einem der Ansprüche 1 bis 4, dadurch gekennzeichnet, daß ein verstellbares zweites Dosierglied (26) für jeden Verteiler (16) in der Nähe des Auslasses des Vorratsbehälters angeordnet ist, das für jeden Auslaß gleich große und—bezogen auf die Auslaßöffnungen (10, 11 bzw. 10', 11')—gleich ausgerichtete Öffnungen hat, um das freie Ausbringen von Streugut pro Zeiteinheit durch die Auslaßöffnung (10, 11 bzw. 10', 11') und die mit ihnen zusammenwirkenden Öffnungen (13, 14) im ersten Dosierglied zu regulieren, und zwar in jeder der drei Positionen des erste Dosiergliedes bezogen auf den Auslaß des Vorratsbehälters.

6. Vorrichtung nach einem der Ansprüche 1 bis 5, dadurch gekennzeichnet, daß das erste und das zweite Dosierglied (12) mit einer hydraulischen oder pneumatischen Stellvorrichtung zur Einstellung in wahlweise einer ihrer Positionen miteinander verbunden sind.

7. Vorrichtung nach Anspruch 6, dadurch gekennzeichnet, daß die hydraulische oder pneumatische Stellvorrichtung vom Fahrersitz des Traktors oder eines ähnlichen Fahrzeuges, an das die Vorrichtung angeschlossen ist, zu betätigen ist.

8. Vorrichtung nach Anspruch 6 oder 7, dadurch gekennzeichnet, daß die hydraulische oder pneumatische Verstellung einer Scheibe durch einen Zeiger (20A) auf einer Skala (24) angezeigt wird, wobei für die erste Scheibe eine Skala mit vier Positionen an der Vorderseite der Vorrichtung angebracht ist und für die zweite Scheibe eine Skala mit zehn Positionen an der Vorderseite der Vorrichtung angebracht ist.

9. Vorrichtung nach einem der Ansprüche 1 bis 8, dadurch gekennzeichnet, daß der Verteiler (6) zwei Streuschaufeln (7) aufweist.

10. Vorrichtung nach einem der Ansprüche 1 bis 9, dadurch gekennzeichnet, daß die beiden Verteiler zwei Streuscheiben (6) sind, die derart angeordnet sind, daß in Draufsicht eine durch die Enden zweier gegenüberliegender · Streuschaufeln (7) eines Verteilers (6) gehende Gerade wenigstens im wesentlichen in Fahrtrichtung der Vorrichtung liegt, während eine durch die Enden zweier gegenüberliegender Streuschaufeln (7) der benachbarten Scheibe (6) gehende Gerade die erstgenannte Gerade wenigstens annähernd senkrecht schneidet.

11. Vorrichtung nach Anspruch 9 oder 10, dadurch gekennzeichnet, daß die äußeren Enden der Streuschaufeln (7) höher angeordnet sind als die inneren Enden.

12. Vorrichtung nach einem der Ansprüche 1 bis 11, dadurch gekennzeichnet, daß das Antriebsgetriebe für den Verteiler (6) ein Übersetzungsgetriebe enthält, mit dem die Drehgeschwindigkeit des Verteilers (6) stetig veränderbar ist.

13. Vorrichtung nach Anspruch 12, dadurch gekennzeichnet, daß die Vorrichtung mit einem Drehzahlmesser (37) versehen ist, mit dessen Hilfe die Drehzahl wenigstens eines Verteilers (6) angezeigt wird.

14. Vorrichtung nach Anspruch 12 oder 13, dadurch gekennzeichnet, daß das stetig veränderbare Übersetzungsgetriebe (37A) von einem Keilriementrieb gebildet ist.

15. Vorrichtung nach Anspruch 12 oder 13, dadurch gekennzeichnet, daß das stetig veränderbare Übersetzungsgetriebe einen Hydromotor (36) umfaßt.

16. Vorrichtung nach einem der Ansprüche 12 bis 15, dadurch gekennzeichnet, daß der Drehzahlmesser (37) an der Vorderseite der Vorrichtung angebracht ist.

17. Vorrichtung nach einem der Ansprüche 12 bis 16, dadurch gekennzeichnet, daß der Drehzahlmesser mechanisch ausgebildet ist.

18. Vorrichtung nach einem der Ansprüche 12 bis 17, dadurch gekennzeichnet, daß der Drehzahlmesser einen Digitalzähler (44) umfaßt.

19. Vorrichtung nach einem der Ansprüche 1 bis 18, dadurch gekennzeichnet, daß die beiden Verteiler (6), die von um aufwärts gerichtete Wellen (5) drehbaren Streuscheiben gebildet sind, nebeneinander angeordnet sind, während die aufwärts gerichteten Drehachsen der Streuscheiben in einem Getriebegehäuse (3) gelagert sind und auf den Wellen (5) im Getriebegehäuse angeordnete Ritzel (4) in Antriebsverbindung mit gleichen Zwischenzahnrädern stehen, von denen eines an einer Welle befestigt ist, die außerdem von einem veränderbaren Übersetzungsgetriebe angetrieben wird.

20. Vorrichtung nach einem der Ansprüche 1 bis 19, dadurch gekennzeichnet, daß die Arbeit der Vorrichtung elektrisch überwacht werden kann.

21. Vorrichtung nach Anspruch 20, dadurch gekennzeichnet, daß eine Überwachungsstafel (43) in der Nähe des Fahrersitzes angeordnet ist.

22. Vorrichtung nach einem der Ansprüche 1 bis 21, dadurch gekennzeichnet, daß die Vorrichtung mit der Dreipunkt-Hebevorrichtung eines Traktors verbunden ist.

· 23. Vorrichtung nach einem der Ansprüche 1 bis 21, dadurch gekennzeichnet, daß die Vorrichtung selbstfahrend ist.

**Revendications**

1. Dispositif d'épandage de matière granulaire et/ou pulvérulente, en particulier d'engrais, de semences ou matière analogue, comprenant un chassis (1), une trémie (2) disposée sur ledit chassis et au moins deux organes de distribution (6) pouvant être entraînés en sens opposés autour d'axes (5) de rotation et chaque organe (6) étant approvisionné pendant son fonctionnement par de la matière venant d'au moins un orifice respectif de la trémie (2), cet orifice étant formé d'au moins une ouverture de sortie (10, 11, resp. 10', 11') située au dessus de l'organe de distribution (6) de telle manière que pendant le fonctionnement la surface couverte par la matière épandue par les organes de distribution (6) coïncide au moins en majeure partie pour l'un et l'autre de ces organes, tandis que près de·l'orifice de sortie (10, 11, resp.̄10', 11') de la trémie (2) pour chaque organe de distribution (6) est disposé un organe doseur mobile (12) avec au moins une ouverture (13, 14) pour fonctionner avec l'orifice de sortie (10, 11 resp. 10', 11') de la trémie (2), caractérisé en ce que chaque organe doseur (12) est pourvu d'au moins une ouverture (13, 14) qui est de taille différente de celle des ouvertures de sortie (10, 11, resp. 10', 11') de la trémie (2),·et en ce que l'ouverture (13, 14) d'un organe doseur (12) est angulairement située autrement autour de l'axe (5) de rotation de son organe de distribution (6) par rapport au sens de marche (A) vis-à-vis de l'ouverture de l'autre organe doseur (12), tandis que chacun des organes doseurs (12) est réglable et susceptible d'être placé sélectivement sur l'une quelconque de trois positions différentes, de telle manière qu'en fonctionnement sur une première position des organes doseurs (12) les orifices de sortie (10, 11, resp. 10', 11') de la trémie (2) vers les deux organes de distribution (6) coopèrent complète- ment avec les ouvertures (13, 14) des organes doseurs (12), ceci ayant pour effet que la matière est épandue par chaque organe distributeur (6) à des distances partiquement égales de part et d'autre de l'axe longitudinal median du dispositif, tandis que dans une deuxième position lesdites ouvertures de sortie (10, 11, resp. 10', 11') sont pratiquement à moitié ouvertes et à moitié fermées de telle sorte que la matière soit épandue seulement sur le côté gauche du dispositif par rapport au sens de marche (A) et dans une troisième position les ouvertures de sortie (10, 11, resp. 10', 11') sont, contrairement à la deuxième position, pratiquement à moitié fermée et à moitié ouverte, de telle sorte que la matière soit épandue vers le côté droit du dispositif.

2. Dispositif selon la revendication 1, caractérisé en ce que chaque organe doseur (12) a deux ouvertures (13 et 14), l'une de ces ouvertures (13) étant égale à chacune de deux ouvertures égales et séparées (10, 11, resp. 10', 11') de la trémie, tandis que l'autre ouverture (14) de chaque organe doseur a une taille qui est double de celle d'une ouverture de sortie (10, 11, resp. 10', 11') de la trémie.

3. Dispositif selon la revendication 1 ou 2, caractérisé en ce que les deux organes doseurs (12) sont couplés l'un à l'autre par un organe d'accouplement (16) pour être réglables angulairement de manière égale autour des axes de rotation des organes de distribution (6) respectifs, tandis que l'un des organes doseurs (12) est couplé à un dispositif de réglage (18, 20, 24) pour régler les organes doseurs (12) sélectivement sur l'une de leurs positions.

4. Dispositif selon la revendication 3, caractérisé en ce que le dispositif de réglage est susceptible d'être fixé en une position où les organes doseurs (12) peuvent être disposés en une quatrième position dans laquelle les ouvertures (13, 14) de ceux-ci sont en une position non-coopérative par rapport aux ouvertures de sortie (10, 11, resp. 10', 11') pour fermer ces ouvertures de sortie par l'organe doseur (12).

5. Dispositif selon l'une quelconque des revendications précédentes, caractérisé en ce qu'un deuxième organe doseur (26) réglable est disposé près de l'orifice de la trémie pour chaque organe distributeur (16), lequel deuxième organe doseur (26) pour chaque orifice a des ouvertures de taille égale et de disposition égale à celle des ouvertures de sortie (10, 11, resp. 10', 11') pour régulariser le libre débit de la matière par unité de temps à travers les ouvertures de sortie (10, 11, resp. 10', 11') et à travers les ouvertures (13, 14) coopérantes des premiers organes doseurs en chacune des trois positions des premiers organes doseurs (12) par rapport à l'orifice de sortie de la trémie (2).

6. Dispositif selon l'une quelconque des revendications précédentes, caractérisé en ce que les premiers et/ou les deuxièmes organes doseurs (12) sont couplés à un dispositif de réglage hydraulique ou pneumatique pour régler les organes doseurs (12) sélectivement sur une de leurs positions.

7. Dispositif selon la revendication 6, caractérisé en ce que le dispositif de réglage hydraulique ou pneumatique peut être actionné à partir du siège du conducteur du tracteur ou ature véhicule analogue auquel est attelé le dispositif.

8. Dispositif selon la revendication 6 ou 7, caractérisé en ce que le réglage hydraulique ou pneumatique d'un disque est associé à un déplacement d'une aiguille indicatrice (20A) se déplaçant sur un cadran (24), un cadran à quatre positions étant disposé à l'avant du dispositif pour un premier disque, tandis que pour le deuxième disque un cadran à dix positions est disposé sur le côté antérieur du dispositif.

9. Dispositif selon l'une quelconque des revendications précédentes, caractérisé en ce qu'un organe de distribution (6) comporte deux lames d'éjection (7).

10. Dispositif selon l'une quelconque des revendications précédentes, caractérisé en ce que les deux organes de distribution sont deux disques épandeurs (6) disposés de telle sorte que, vus en plan, une ligne passant par les extrémités de deux lames d'éjection (7) opposées d'un disque épandeur (6) s'étendent au moins sensiblement dans le sens prévu de marche du dispositif, tandis qu'une ligne passant par les extrémités des lames d'éjection (7) opposées du disque (6) adjacent intersecte la ligne précitée d'une manière au moins sensiblement perpendiculaire.

11. Dispositif selon la revendication 9 ou 10, caractérisé en ce que, près de leurs extrémités externes, les lames (7) sont disposées à un niveau plus haut que près de leurs extrémités internes.

12. Dispositif selon l'une quelconque des revendications précédentes, caractérisé en ce que le mécanisme d'entraînement du disque épandeur (6) comprend une transmission avec laquelle la vitesse de rotation de l'organe de distribution (6) est variable de manière continue.

13. Dispositif selon la revendication 12, caractérisé en ce qu'il comprend un compte-tours (37) à l'aide duquel est indiqué le nombre de tours d'au moins un disque épandeur (6).

14. Dispositif selon la revendication 12 ou 13, caractérisé en ce que la transmission à variation continue (37A) est constituée d'une transmission à courroie trapézoïdale.

15. Dispositif selon la revendication 12 ou 13, caractérisé en ce que la transmission à variation continue comprend un moteur hydraulique (36).

16. Dispositif selon l'une quelconque des revendications 12 à 15, caractérisé en ce que le compte-tours (37) est situé à l'avant du dispositif.

17. Dispositif selon l'une quelconque des revendications 12 à 16, caractérisé en ce que le compte-tours est d'un modèle mécanique.

18. Dispositif selon l'une quelconque des revendications 12 à 17, caractérisé en ce que le compte-tours comporte un compteur numérique (44).

19. Dispositif selon l'une quelconque des revendications précédentes, caractérisé en ce que les deux organes de distribution (6) formés des disques épandeurs pouvant tourner sur des arbres (5) s'étendant vers le haut sont disposés côte-à-côte, tandis que les axes de rotation, dirigés vers le haut, des disques épandeurs tournent dans une boîte d'engrenages (3) et des engrenages (4) à denture frontale disposés sur les arbres (5) à l'intérieur de la boîte d'engrenages sont entraînés en étant en prise avec des engrenages intermédiaires identiques dont un est fixé à un arbre qui est en outre en prise avec une transmission variable.

20. Dispositif selon l'une quelconque des revendications précédentes, caractérisé en ce que le fonctionnement du dispositif peut être surveillé par des moyens électriques.

21. Dispositif selon la revendication 20, caractérisé en ce qu'un panneau moniteur (43) est prévu près du siège du conducteur du dispositif.

22. Dispositif selon l'une quelconque des revendications précédentes, caractérisé en ce que le dispositif est relié au dispositif de relevage en trois points d'un tracteur.

23. Dispositif selon l'une quelconque des revendications 1 à 21, caractérisé en ce que le dispositif est automoteur.

FIG. 1

FIG. 2

Fig.3

0 088 105

2

FIG.4

FIG.5

FIG.6

FIG.7

FIG. 8

FIG. 9

FIG.10

FIG.11

FIG.12